# EUROPÄISCHE PATENTSCHRIFT

(11) **EP 3 971 807 B1**
(45) Veröffentlichungstag und Bekanntmachung des Hinweises auf die Patenterteilung: **11.02.2026**
(21) Anmeldenummer: 21196738.5
(22) Anmeldetag: 15.09.2021
(51) Int. Cl.: G06Q 10/10, G08G 5/00

(54) **ASSISTENZSYSTEM UND VERFAHREN ZUR UNTERSTÜTZUNG EINES OPERATEURS**
ASSISTANCE SYSTEM AND METHOD FOR SUPPORTING A SURGEON
SYSTÈME D'AIDE ET PROCÉDÉ DE SOUTIEN D'UN OPÉRATEUR

(30) Priorität: 16.09.2020 DE 102020124172
(43) Veröffentlichungstag der Anmeldung: 23.03.2022
(73) Patentinhaber: Deutsches Zentrum für Luft- und Raumfahrt e.V., 53227 Bonn-Oberkassel (DE)
(72) Erfinder: RATAJ, Jürgen, 38536 Meinersen (DE)
(74) Vertreter: Gramm, Lins & Partner Patent- und Rechtsanwälte PartGmbB

(56) Entgegenhaltungen:
- DE-B3- 102019 113 680

## Beschreibung

Die Erfindung betrifft ein Assistenzsystem zur Unterstützung eines Operateurs bei Planungs- und/oder Führungsaufgaben einer zu überwachenden Situation, wobei das Assistenzsystem in einem Führungsmodus automatisch planungs- und/oder führungsbezogene Anweisungen in Bezug auf konkrete Zustände der zu überwachenden Situation generiert und zum im Wesentlichen autonomen Durchführen der Planungs- und/oder Führungsaufgabe der zu überwachenden Situation basierend auf den generierten planungs- und/oder führungsbezogenen Anweisungen eingerichtet ist.

Durch den weiter steigenden Grad der Automation in fast allen Lebensbereichen kommen vermehrt immer mehr Assistenzsysteme zum Einsatz, die ganz oder nur in Teilbereichen die Planungs- und/oder Führungsaufgaben eines Operateurs unterstützen oder sogar vollständig die Kontrolle übernehmen, um die mit der Planungs- und/oder Führungsaufgabe betraute Person zu entlasten und die Sicherheit zu erhöhen. In einem sehr hohen Automationslevel können Assistenzsysteme die Planungs- und/oder Führungsaufgaben eines Operateurs nahezu oder vollständig autonom Durchführen, sofern das Assistenzsystem ein hinreichendes maschinelles Situationsbewusstsein erlangt hat.

So befinden sich in modernen Kraftfahrzeugen eine Vielzahl von elektronischen Zusatzeinrichtungen, die den Fahrer (Operateur) bei seiner Planungs- und/oder Führungsaufgabe in bestimmten Fahrsituationen unterstützen sollen (bspw. ABS, ACC, etc). Bei solchen elektronischen Zusatzeinrichtungen in Kraftfahrzeugen, auch Fahrerassistenzsysteme genannt, werden durch das Kraftfahrzeug kontinuierlich entsprechende Zustandsdaten des Fahrzeuges und der Umgebung ermittelt, welche die zu assistierende Situation beschreibenden bzw. definieren und so den aktuellen Zustand der Situation im maschinellen Situationsbewusstsein abbilden. Solche Zustandsdaten sind in der Regel sensorische Messwerte, auf deren Basis dann der aktuelle und/oder prognostizierte Zustand der zu assistierenden Situation durch das Assistenzsystem berechnet werden kann. Unter Kenntnis des aktuellen und/oder prognostizierten Zustandes der zu assistierenden Situation kann dann das Assistenzsystem entsprechende Maßnahmen ergreifen, die von einer einfachen Ausgabe von Informationen bezüglich der Situation bis hin zu automatischen Eingriffen in die Planung und/oder Steuerung reichen können.

Solche Assistenzsysteme finden sich jedoch nicht nur im Bereich der Kraftfahrzeuge, sondern mittlerweile in fast allen Bereichen, in denen ein Operateur bei situationsabhängigen Planungs- und/oder Führungsaufgaben unterstützt werden muss. So finden sich im Bereich der Lotsen, beispielsweise bei Fluglotsen oder Hafenlotsen, elektronische Systeme, die den Lotsen als Operateur einen Überblick über die Gesamtsituation verschaffen und gegebenenfalls entsprechenden Handlungsoptionen für den Lotsen aus der Gesamtsituation ableiten, um den Lotsen bestmöglich zu unterstützen.

So wird bei Fluglotsen basierend auf den Radardaten, den von den Flugzeugen ausgesendeten Informationen und weiteren externen Zustandsdaten (bspw. Wetterdaten) die Gesamtsituation in einem bestimmten Flugbereich (beispielsweise im Anflugbereich eines Flughafens) kontinuierlich ermittelt und graphisch auf einem Display dem Lotsen angezeigt, um so den Fluglotsen ein möglichst umfassendes Situationsbewusstsein zu verschaffen. Außerdem können je nach verwendetem System auch Handlungsoptionen in Form von Anweisungen generiert und dem Lotsen angezeigt werden, um ihn bei seiner Planungs- und/oder Führungsaufgabe noch besser unterstützen zu können. Derartige Handlungsoptionen werden dabei basierend auf dem Zustand der Gesamtsituation, die sich aus den Zustandsdaten ergibt, von dem System automatisch generiert und dem Lotsen dann präsentiert.

Derzeit befinden sich bei den Fluglotsen entsprechende Assistenzsysteme in der Erprobung, die automatisch basierend auf den bereitgestellten Zustandsdaten der Verkehrssituation planungs- und/oder führungsbezogene Anweisungen generieren und zur Durchführung der Planungs- und/oder Führungsaufgabe verwenden. Das Assistenzsystem übernimmt dabei die Kontrolle über die Situation und tritt an die Stelle des Operateurs. Der Verkehr wird dabei basierend auf den planungs- und/oder führungsbezogenen Anweisungen, die von dem Assistenzsystem unter Kenntnis der Gesamtsituation generiert wurde, in Abhängigkeit von der übergeordneten Führungsstrategie geführt und geleitet.

Aus der DE 10 2011 107 934 A1 ist ein Assistenzsystem zur Unterstützung bei situationsabhängigen Planungs- und/oder Führungsaufgaben einer Regelstrecke bekannt, wobei auch hier gattungsgemäß zunächst mithilfe einer Zustandserfassungseinheit der Zustand der Regelstrecke sensorisch erfasst wird. Mithilfe einer akustischen Aufnahmeeinheit werden akustische Sprachsignale zwischen dem Lotsen und einem Piloten im Luftraum aufgenommen und analysiert, wobei basierend auf dem Inhalt der Sprachsignale zwischen Lotse und Pilot dann der Zustand der Regelstrecke angepasst wird. Hierdurch erlangt bzw. behält das Assistenzsystem sehr frühzeitig ein vollständiges Situationsbewusstsein, um möglichst lange die Automation aufrechtzuerhalten.

Aus der DE 20 2013 006 009 U1 ist ein Fahrerassistenzsystem bekannt, das zur Fahrerunterstützung zumindest ein akustisches Warn- oder Hinweissignal ausgeben kann. Der Fahrer besitzt dabei die Möglichkeit, dass für ihn optimale Warn- oder Hinweissignal aus einer Vielzahl von vorgegebenen Signalen auszuwählen und abzuspeichern.

Aus der DE 10 2019 113 680 B3 ist ein Assistenzsystem zur Unterstützung eines Operateurs bei Planungs- und/oder Führungsaufgaben bekannt, bei dem die Lenkung der Aufmerksamkeit auf relevante Aspekte der Planungs- und/oder Führungsaufgabe durch eine individuelle Tonfolge realisiert wird. Der Operateur kann so seine Aufmerksamkeit entsprechend priorisieren, ohne seinen derzeitigen Fokus verlassen zu müssen.

Ein Problem stellt derzeit noch die Übergabe der Automation zurück an den Operateur dar, da in diesem Zusammenhang das Assistenzsystem selber feststellen muss, dass es die Planungs- und/oder Führungsaufgabe zukünftig nicht mehr mit hinreichender Sicherheit realisieren kann. Das Assistenzsystem muss dabei selbstständig feststellen können, dass es innerhalb seiner Systemgrenzen den zukünftig zu erwartenden Zustand der zu überwachenden Situation nicht mehr prozesssicher autonom handhaben kann und somit bezüglich die Kontrolle an den Operateur übergeben werden muss.

Es ist daher Aufgabe der vorliegenden Erfindung ein verbessertes Assistenzsystem zur Unterstützung eines Operateurs diesbezüglich anzugeben.

Die Aufgabe wird mit dem Assistenzsystem gemäß Patentanspruch 1 erfindungsgemäß gelöst. Vorteilhafte Ausgestaltungen der Erfindung finden sich in den entsprechenden Unteransprüchen.

Gemäß Anspruch 1 wird ein Assistenzsystem zur Unterstützung eines Operateurs bei Planungs- und/oder Führungsaufgaben einer zu überwachenden Situation beansprucht, wobei das Assistenzsystem in einem Führungsmodus automatisch planungs- und/oder führungsbezogene Anweisungen in Bezug auf konkrete Zustände der zu überwachenden Situation generiert und zum im Wesentlichen autonomen Durchführen der Planungs- und/oder Führungsaufgabe der zu überwachenden Situation basierend auf den generierten planungs- und/oder führungsbezogenen Anweisungen eingerichtet ist. Die im wesentliche autonome Durchführung meint hierbei die fast vollständige oder gänzlich vollständige autonome Durchführung. Unter der Unterstützung des Operateurs wird dabei nicht nur die überwachende Unterstützung des Operateurs verstanden, bei der der Operateur lediglich überwachend vorgesehen ist, sondern auch die autonome Unterstützung des Operateurs, bei der der Operateur noch nicht einmal überwachend vorgesehen ist und das System vollständig autonom arbeitet, ohne dass der Operateur zumindest überwachend anwesend sein muss.

Unter planungs- und/oder führungsbezogenen Anweisungen werden dabei situationsbezogene Steuerbefehle verstanden, mit denen sich die Planungs- und/oder Führungsaufgabe realisieren lässt. Solche Anweisungen können beispielsweise automatisiert durch eine Automation (beispielsweise eine Fahrzeug Automation) ausgeführt werden, wodurch die Automation die Planungs- und/oder Führungsaufgabe umsetzt. Denkbar ist aber auch, dass solche Anweisungen an andere in der Situation handelnde Akteure gerichtet sind, die dann dieser Anweisungen in entsprechende planungs- und/oder führungsbezogene Handlungen umsetzen. Unter planungs- und/oder führungsbezogenen Anweisungen werden demnach Steuerbefehle verstanden, die entweder an eine Maschine oder an andere handelnde Akteure gerichtet sind. Solche Akteure können beispielsweise Fahrzeugführer einer zu überwachenden Verkehrssituation sein.

Erfindungsgemäß ist nun vorgesehen, dass das das Assistenzsystem eine Bewertungskomponente hat, die einen wahlweise aktivierbaren Lernmodus und Bewertungsmodus hat. Die Bewertungskomponente kann dabei im Lernmodus eine Bewertung von planungs- und/oder führungsbezogenen Anweisungen in Bezug auf einen konkreten Zustand der zu überwachenden Situation in einem maschinellen Lernsystem trainieren bzw. lernen, während im Bewertungsmodus eine Bewertung einer konkreten planungs- und/oder führungsbezogenen Anweisung in Bezug auf einen konkreten Zustand der zu überwachenden Situation aus dem trainierten maschinellen Lernsystem ermittelbar ist. Die Bewertungskomponente kann demnach beispielsweise entweder in den Lernmodus oder in den Bewertungsmodus geschaltet werden, wobei im Lernmodus eine Bewertung einer planungs- und/oder führungsbezogenen Anweisung in Bezug auf einen konkreten Zustand der zu überwachenden Situation gelernt wird und diese Bewertung im Bewertungsmodus abgerufen werden kann. Das Assistenzsystem erlangt somit in dem maschinellen Lernsystem ein Bewusstsein, wie gut oder wie schlecht die planungs- und/oder führungsbezogene Anweisung im Hinblick auf einen konkreten Zustand der zu überwachenden Situation ist. Damit kann das Assistenzsystem diese Bewertung einer Anweisung im Hinblick auf eine konkreten Zustand der zu überwachenden Situation abrufen und somit feststellen, wie gut oder wie schlecht diese Anweisung in Bezug auf den aktuellen Zustand der zu überwachenden Situation bewertet wurde.

Dabei kann in der Deaktivierung der Bewertung insofern eine Dringlichkeit der Übernahme mit einfließen, die die Bewertungskomponente ermitteln kann. So kann eine dringliche Übernahme als auch eine über einen längeren Zeitraum geplante Übergabe vorbereitet werden. Dabei spielt das genaue Vorgehen bei der Übergabe vom System zum Operateur eine mehr oder weniger untergeordnete Rolle und kann in an sich bekannter Art erfolgen. Das Vorgehen bei der Übergabe kann dabei aus den Informationen der Bewertungskomponente hinsichtlich ihrer Dringlichkeit bewertet werden.

Dabei ist das Assistenzsystem ferner eingerichtet, bei einem Aktivieren des Führungsmodus den Bewertungsmodus der Bewertungskomponente zu aktivieren, mittels der Bewertungskomponente dann eine Bewertung einer basierend auf einem konkreten Zustand der zu überwachenden Situation automatisch generierten planungs- und/oder führungsbezogene Anweisung aus dem trainierten maschinellen Lernsystem zu ermitteln und den Führungsmodus in Abhängigkeit von der ermittelten Bewertung den Führungsmodus im aktivierten Zustand zu belassen oder zu deaktivieren.

Erfindungsgemäß wird somit vorgeschlagen, basierend auf der erlernten Bewertung von Anweisungen in Bezug auf konkrete Zustände der zu überwachenden Situation den Führungsmodus im aktivierten Zustand zu belassen oder den Führungsmodus zu deaktivieren.

Damit wird es möglich, dass das Assistenzsystem selbstständig feststellt, wann die generierten planungs- und/oder führungsbezogenen Anweisungen nicht mehr geeignet sind, in Bezug auf den konkreten Zustand der zu überwachenden Situation die Planungs- und/oder Führungsaufgabe autonom durchzuführen. Das Assistenzsystem erkennt basierend auf den Bewertungen, dass diese in der Vergangenheit gelernten Bewertungen für diese Anweisungen in Bezug auf den konkreten Zustand der zu überwachenden Situation nicht geeignet sind, die Planungs- und/oder Führungsaufgabe autonom zu realisieren. Vielmehr weist das Assistenzsystem basierend auf der Bewertung, dass es die Unterstützung des Operateurs benötigt, damit die Planungs- und/oder Führungsaufgabe prozesssicher ausgeführt werden kann - sei es nun von dem Assistenzsystem oder dem Operateur oder beiden gemeinsam.

Gemäß einer Ausführungsform ist vorgesehen, dass das Assistenzsystem ferner in einem Assistenzmodus automatisch planungs- und/oder führungsbezogene Anweisungen in Bezug auf konkrete Zustände der zu überwachenden Situation generiert und dem Operateur zur Unterstützung der Planungs- und/oder Führungsaufgabe der zu überwachenden Situation die generierten planungs- und/oder führungsbezogene Anweisungen vorschlägt.

Demnach hat das Assistenzsystem sowohl einen Führungsmodus als auch einen Assistenzmodus, die wechselseitig aktivierbar sind, sodass entweder der Führungsmodus oder der Assistenzmodus aktiviert ist. Hierneben ist es denkbar, dass das Assistenzsystem noch einen manuellen Modus hat, bei dem keinerlei planungs- und/oder führungsbezogene Anweisungen in Bezug auf konkrete Zustände der zu überwachenden Situation automatisch generiert werden.

Die im Assistenzmodus generierten planungs- und/oder führungsbezogenen Anweisungen werden dabei nicht durch das Assistenzsystem selber zur Durchführung der Planungs- und/oder Führungsaufgabe verwendet, sondern dem Operateur angezeigt, sodass dieser beispielsweise aus einer Liste mehrere Anweisungen die für ihn aus seiner Sicht geeignetste Anweisung auswählen kann. Im Assistenzmodus verbleibt demnach die Kontrolle über die Planungs- und/oder Führungsaufgabe bei dem Operateur, bei dem das Assistenzsystem lediglich unterstützend wirkt. Erst im Führungsmodus übernimmt das Assistenzsystem die Kontrolle über die Planungs- und/oder Führungsaufgabe und führt die Anweisungen entsprechend autonom aus.

Wählt der Operateur eine der vorgeschlagenen Anweisungen im Assistenzmodus aus, um die Anweisungen selber oder automatisch durch das Assistenzsystem ausführen zu lassen, so kann der ausgewählten Anweisung eine höhere Bewertung hinterlegt werden, als den übrigen, vorgeschlagenen aber nicht ausgewählten Anweisungen zugeordnet werden. Das Assistenzsystem ist demnach eingerichtet, die Bewertungen der vorgeschlagenen Anweisungen in Abhängigkeit der Auswahl einer Anweisung durch den Operateur zu erstellen, wobei diese Bewertung im Lernmodus zugrunde gelegt wird.

Gemäß einer Ausführungsform vorgesehen, dass das Assistenzsystem im Assistenzmodus eingerichtet ist, die in Bezug auf einen konkreten Zustand der zu überwachenden Situation automatisch generierten und vorgeschlagenen planungs- und/oder führungsbezogene Anweisungen mit einer durch den Operateur erstellten planungs- und/oder führungsbezogenen Anweisung zu vergleichen und in Abhängigkeit von dem Vergleich für zumindest eine automatisch generierte und vorgeschlagene planungs- und/oder führungsbezogene Anweisung eine Bewertung zu ermitteln, die dann im Lernmodus der Bewertungskomponente zum Trainieren des maschinellen Lernsystems verwendet wird.

In dieser Ausführungsform wird die Bewertung anhand eines Vergleiches zwischen einer vom Operateur erstellten Anweisung und den vorgeschlagenen Anweisungen erstellt, die dann im Lernmodus zugrunde gelegt werden. Dies ist immer dann der Fall, wenn die vom Assistenzsystem vorgeschlagenen Anweisungen nicht den Ansprüchen des Operateurs genügen und der Operateur selber planungs- und/oder führungsbezogene Anweisungen erstellt, die von den vorgeschlagenen Anweisungen abweichen. Dabei ist es denkbar, dass die Bewertung umso schlechter ausfällt, je größer die inhaltliche Abweichung der vorgeschlagenen Anweisung mit der vom Operateur selbst erstellten Anweisung ist. Dadurch wird es möglich, basierend auf dem Verhalten des Operateurs und dem Verhalten des Assistenzsystems die Systemgrenze des Assistenzsystems automatisch durch das Assistenzsystem selbst zu erlernen. Die Systemgrenze kann bspw. auch dann erreicht werden, wenn dem Assistenzsystem bewusst wird, dass es schlechtere Lösungen erzeugt als der Operateur. Aufgrund der Kenntnis der verfügbaren menschlichen Ressourcen kann das System hier entscheiden, ob es weiter macht oder Unterstützung anfragt. Diese Systemgrenze besteht in einem Abwägen aufgrund der Randbedingungen, ob das System versucht, über eine Schwächephase selbst zu kommen oder abgibt. Demnach kann das Erreichen einer Systemgrenze unter Kenntnis eines aktuellen oder prognostizierten Zustands der zu überwachenden Situation auch überwunden werden, wenn erkennbar wird, das innerhalb eines vorgegebenen Zeitraumes das Assistenzsystem im Führungsmodus verbleiben kann.

Gemäß einer Ausführungsform ist vorgesehen, dass das Assistenzsystem im Assistenzmodus eingerichtet ist, die in Bezug auf einen konkreten Zustand der zu überwachenden Situation automatisch generierten und vorgeschlagenen planungs- und/oder führungsbezogene Anweisungen durch den Operateur bewerten zu lassen, um eine Bewertung zu ermitteln, die dann im Lernmodus der Bewertungskomponente zum Trainieren des maschinellen Lernsystems verwendet wird.

Das Assistenzsystem weist hierfür die Möglichkeit auf, im Assistenzmodus die vorgeschlagenen Anweisungen durch den Operateur bewerten zu lassen, beispielsweise durch Bereitstellen eines auswählbaren Bewertungssystems (beispielsweise Schulnoten, Sterne, Punkte, etc.). Der Operateur erhält somit die Gelegenheit, durch Bewerten der durch das Assistenzsystem vorgeschlagenen Anweisungen die eigene Systemgrenze des Assistenzsystems lernen zu lassen, sodass der Operateur sich besser darauf verlassen kann, dass das Assistenzsystem selbstständig die eigene Systemgrenze besser erkennt.

Gemäß einer Ausführungsform ist vorgesehen, dass das Assistenzsystem eingerichtet ist, beim Deaktivieren des Führungsmodus den Assistenzmodus zu aktivieren. Stellt das Assistenzsystem anhand der ermittelten Bewertungen im Führungsmodus fest, dass die Planungs- und/oder Führungsaufgabe durch das Assistenzsystem nicht mehr mit hinreichender Prozesssicherheit erfüllt werden kann, wird der Führungsmodus deaktiviert und stattdessen der Assistenzmodus aktiviert. Durch diesen Wechsel der Kontrolle vom Assistenzsystem auf den Operateur wird durch den Assistenzmodus sichergestellt, dass trotzdem das Assistenzsystem noch Vorschläge für den Operateur unterbreitet, damit dieser zügig das nötige Situationsbewusstsein erlangt.

Gemäß einer Ausführungsform ist vorgesehen, dass das Assistenzsystem eingerichtet ist, beim Aktivieren des Assistenzmodus den Lernmodus der Bewertungskomponente zu aktivieren. Dabei ist es generell denkbar, dass beim Aktivieren des Führungsmodus der Lernmodus der Bewertungskomponente deaktiviert und stattdessen der Bewertungsmodus aktiviert wird. Beim Wechsel von dem Führungsmodus in den Assistenzmodus (Deaktivieren des Führungsmodus bei gleichzeitiger Aktivierung des Assistenzmodus) wird in der Bewertungskomponente der Lernmodus aktiviert und der Bewertungsmodus gegebenenfalls deaktiviert. Dieses Vorgehen kann dabei unabhängig von der Tatsache geschehen, ob die Deaktivierung des Führungsmodus durch das Assistenzsystem selber erfolgt oder durch eine manuelle Eingabe des Operateurs.

Gemäß einer Ausführungsform ist vorgesehen, dass das Assistenzsystem eingerichtet ist, vor dem Deaktivieren des Führungsmodus und Aktivieren des Assistenzmodus eine Übergabestrategie zur Übergabe der Planungs- und/oder Führungsaufgaben der zu überwachenden Situation vom Assistenzsystem zum Operateur ermittelt und angewendet wird.

Eine solche Übergabestrategie soll sicherstellen, dass der Operateur zügig in den aktuellen Zustand der zu überwachenden Situation eingeführt und das notwendige Situationsbewusstsein erlangt, um die Zeit der Kontrollübergabe (vom maschinellen Situationsbewusstsein zum Situationsbewusstsein des Operateurs) möglichst gering zu halten. Der Operateur muss dabei schnellstmöglich auf den notwendigen Wissensstand gebracht werden, um die Kontrolle über die Situation mit dem größtmöglichen Situationsbewusstsein übernehmen zu können. Erst dann kann prozesssicher die Planungs- und/oder Führungsaufgabe übernommen werden.

Gemäß einer Ausführungsform ist vorgesehen, dass das Assistenzsystem mit einem Sensorsystem verbunden ist, um den aktuellen Zustand der zu überwachenden Situation zu erfassen. Ein solches Sensorsystem weist in der Regel eine Vielzahl von verschiedensten Sensoren auf, die unterschiedliche Parameter der Situation erfassen, sodass sich daraus der aktuelle Zustand der zu überwachenden Situation ableiten lässt. Unter einem aktuellen Zustand der zu überwachenden Situation wird dabei auch basierend auf den aktuellen Zustandsdaten der in die Zukunft prognostizierte Zustand der zu überwachenden Situation verstanden, sodass sich aus dem aktuellen Zustand der zu überwachenden Situation auch ergibt, wie der Zustand der zu überwachenden Situation im darauffolgenden Zeitschritt oder in darauffolgenden Zeitschritten sein wird.

Gemäß einer Ausführungsform ist vorgesehen, dass das maschinelle Lernsystem ein neuronales Netz aufweist.

Gemäß einer Ausführungsform ist vorgesehen, dass das Assistenzsystem zur Unterstützung eines Lotsen bei Planungs- und/oder Führungsaufgaben einer zu überwachenden Verkehrssituation, insbesondere einer Luftverkehrssituation, Schiffsverkehrssituation oder einer Straßenverkehrssituation eingerichtet ist.

Die Erfindung wird anhand der beigefügten Figur beispielhaft näher erläutert. Es zeigt:

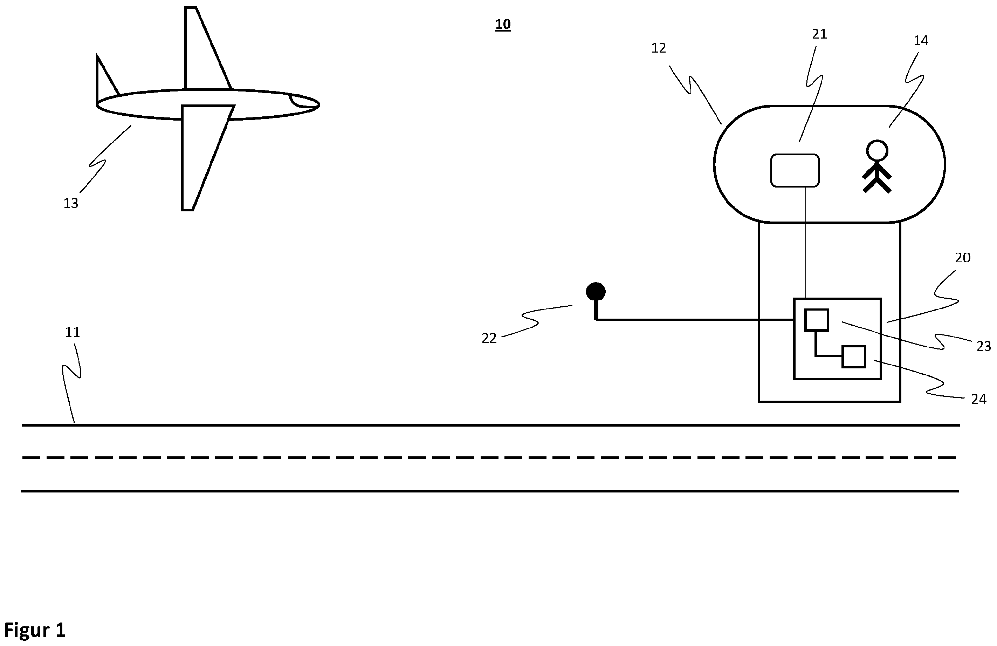

- Figur 1: schematische Darstellung des erfindungsgemäßen Assistenzsystems in einem Anwendungsszenario

Figur 1 zeigt zu Anschauungszwecken eine Flughafensituation 10 mit einer Landebahn 11, einem Kontrollzentrum 12 (Tower) sowie mit wenigstens einem Verkehrsflugzeug 13. Im Kontrollzentrum 12 befindet sich wenigstens eine Operateur 14 (Lotse), der die Situation 10 überwachen soll. Hierfür hat der Operateur 14 eine Planungs- und/oder Führungsaufgabe, die im Anwendungsszenario der Figur 1 beispielhaft darin bestehen kann, die Verkehrsflugzeuge 13 sicher auf die Landebahn 11 zu führen.

Der Operateur 14 steht hierfür mit den Piloten der Verkehrsflugzeuge 13 in Kontakt und erteilt Ihnen planungs- und/oder führungsbezogene Anweisungen, um die Verkehrsflugzeuge 13 in der vom Operateur 14 gewünschten Form zu führen. Die planungs- und/oder führungsbezogenen Anweisungen, die der Operateur 14 an die Piloten der Verkehrsflugzeuge 13 ausgibt, basieren auf der Kenntnis der zu überwachenden Situation 10, d. h. auf dem aktuellen Zustand der zu überwachenden Situation 10. Dieser aktuelle Zustand lässt sich mithilfe von Sensorsystemen, beispielsweise Radarsystemen, erfassen, wobei die Summe der erfassten Parameter den aktuellen Zustand der zu überwachenden Situation 10 abbildet. Solche Parameter können beispielsweise die Lage der Verkehrsflugzeuge 13 sein, Wetterinformationen, topographische Informationen etc.

Im Kontrollzentrum 12 befindet sich des Weiteren eine Assistenzsystem 20, das ein grafisches Display 21 für den Operateur 14 hat. Auf dem Display 21 können dabei entsprechende Informationen des Assistenzsystems 20 für den Operateur 14 angezeigt werden. Das Assistenzsystem 20 steht des Weiteren mit einer infrastrukturseitig verbauten Sensorik 22 in Verbindung, um den aktuellen Zustand der zu überwachenden Situation 10 sensorisch erfassen zu können.

Das Assistenzsystem 20 ist dabei zur Unterstützung des Operateurs 14 bei seiner Planungs- und/oder Führungsaufgabe ausgebildet und besitzt eine Assistenzkomponente 23 sowie eine Bewertungskomponente 24. Die Assistenzkomponente 23 kann dabei in einem Führungsmodus oder einem Assistenzmodus geschaltet werden, durch die jeweils unterschiedliche Grade der Assistenz für den Operateur 14 abgebildet werden.

Im Führungsmodus generiert die Assistenzkomponente 23 automatisch planungs- und/oder führungsbezogene Anweisungen in Bezug auf einen konkreten Zustand der zu überwachenden Situation 10 und führt diese planungs- und/oder führungsbezogenen Anweisungen automatisch aus, um die Planungs- und/oder Führungsaufgabe des Operateurs 14 autonom durch das Assistenzsystem 20 ausführen zu lassen. Dies beinhaltet im Anwendungsszenario der Figur 1 beispielsweise das automatische aussenden von Anweisungen an die Piloten der Verkehrsflugzeuge 13.

In einem Assistenzmodus der Assistenzkomponente 23 werden hingegen die planungs- und/oder führungsbezogenen Anweisungen nicht automatisch zur Durchführung der Planungs- und/oder Führungsaufgabe verwendet, sondern in Form von Vorschlägen auf dem Display 21 dem Operateur 14 dargestellt. Der Operateur 14 hat dann die Gelegenheit, einen der Vorschläge auszuwählen und somit auszuführen oder selbstständig eigene planungs- und/oder führungsbezogene Anweisungen zu generieren und entsprechend auszugeben.

Die Bewertungskomponente 24, die ein maschinelles Lernsystem beinhaltet, kann ebenfalls in zwei Modi betrieben werden, nämlich in einem Lernmodus und in einem Bewertungsmodus. Im Lernmodus trainiert die Bewertungskomponente 24 das maschinelle Lernsystem dahingehend, dass eine Bewertung von planungs- und/oder führungsbezogenen Anweisungen in Bezug auf einen konkreten Zustand der zu überwachenden Situation 10 gelernt wird, während im Bewertungsmodus für konkrete planungs- und/oder führungsbezogene Anweisungen eine Bewertung aus dem maschinellen Lernsystem ermittelt werden kann.

Befindet sich die Assistenzkomponente 23 im Führungsmodus, so schaltet die Assistenzkomponente 23 die Bewertungskomponente 24 in den Bewertungsmodus. Im Führungsmodus wird nun von der Assistenzkomponente 23 fortwährend für die automatisch generierten planungs- und/oder führungsbezogenen Anweisungen eine Bewertung aus dem maschinellen Lernsystem der Bewertungskomponente 24 ermittelt, um die Fähigkeit des Assistenzsystems 20 hinsichtlich der Durchführung der Planungs- und/oder Führungsaufgabe bewerten und überwachen zu können.

Ist die Assistenzkomponente 23 nicht in der Lage, Anweisungen zu generieren, die eine Bewertung oberhalb eines Schwellwertes bzw. Schwellenwertbereiches haben, so deaktiviert die Assistenzkomponente den Führungsmodus und wechselt in den Assistenzmodus. Hierbei wird die Bewertungskomponente 24 von dem Bewertungsmodus in den Lernmodus geschaltet, damit nunmehr automatisch generierte Anweisungen, die als Vorschläge auf dem Display 21 für den Operateur 14 angezeigt werden, hinsichtlich ihrer Bewertung und dem aktuellen Zustand der Situation in dem maschinellen Lernsystem trainiert werden können.

Das Bewerten der Vorschläge des Assistenzsystems 20 kann beispielsweise dadurch geschehen, dass die ausgewählte Anweisung eine hohe Bewertung erhält, während die übrigen Anweisungen eine niedrigere Bewertung erhalten. Die Bewertung der ausgewählten Anweisung kann dabei herabgesetzt werden, wenn der Operateur 14 die Anweisung zwar auswählt, doch Modifikationen an dem Vorschlag vornimmt.

Denkbar ist des Weiteren, dass der Operateur 14 die auf dem Display 21 dargestellten Vorschläge mithilfe einer Bewertungsskala bewertet.

Denkbar ist des Weiteren, dass der Operateur 14 selbstständig eigene planungs- und/oder führungsbezogene Anweisungen generiert und die auf dem Display 21 dargestellten Anweisungen ignoriert, wobei das Assistenzsystem 20 dann die vom Assistenzsystem 20 generierten Anweisungen mit der vom Operateur 14 generierten Anweisung vergleicht, wobei in Abhängigkeit des Vergleiches dann eine Bewertung für jede Anweisung erstellt wird.

Das Assistenzsystem 20 ist somit in der Lage, selbstständig seine Systemgrenzen auch bei komplexen Planungs- und/oder Führungsaufgaben zu ermitteln, sodass immer rechtzeitig ein Wechsel vom Führungsmodus in den Assistenzmodus möglich ist.

### Bezugszeichenliste

- 10: Flughafensituation/zu überwachende Situation
- 11: Landebahn
- 12: Kontrollzentrum
- 13: Verkehrsflugzeug
- 14: Operateur
- 20: Assistenzsystem
- 21: Display
- 22: Sensorik
- 23: Assistenzkomponente
- 24: Bewertungskomponente

## Patentansprüche

1. Assistenzsystem (20) zur Unterstützung eines Operateurs (14) bei Planungs- und/oder Führungsaufgaben einer zu überwachenden Situation (10), wobei das Assistenzsystem (20) in einem Führungsmodus automatisch planungs- und/oder führungsbezogene Anweisungen in Bezug auf konkrete Zustände der zu überwachenden Situation (10) generiert und zum im Wesentlichen autonomen Durchführen der Planungs- und/oder Führungsaufgabe der zu überwachenden Situation (10) basierend auf den generierten planungs- und/oder führungsbezogenen Anweisungen eingerichtet ist, **dadurch gekennzeichnet, dass** das Assistenzsystem (20) eine Bewertungskomponente (24) hat, die einen wahlweise aktivierbaren Lernmodus und Bewertungsmodus hat und eingerichtet ist,
- im Lernmodus eine Bewertung von planungs- und/oder führungsbezogenen Anweisungen in Bezug auf einen konkreten Zustand der zu überwachenden Situation (10) in einem maschinellen Lernsystem zu trainieren, und
- im Bewertungsmodus eine Bewertung einer konkreten planungs- und/oder führungsbezogenen Anweisung in Bezug auf einen konkreten Zustand der zu überwachenden Situation (10) aus dem trainierten maschinellen Lernsystem zu ermitteln,
wobei das Assistenzsystem (20) ferner eingerichtet ist,
- bei einem Aktivieren des Führungsmodus den Bewertungsmodus der Bewertungskomponente (24) zu aktivieren,
- mittels der Bewertungskomponente (24) dann eine Bewertung einer basierend auf einem konkreten Zustand der zu überwachenden Situation (10) automatisch generierten planungs- und/oder führungsbezogene Anweisung aus dem trainierten maschinellen Lernsystem zu ermitteln und
- den Führungsmodus in Abhängigkeit von der ermittelten Bewertung den Führungsmodus im aktivierten Zustand zu belassen oder zu deaktivieren.

2. Assistenzsystem (20) nach Anspruch 1, **dadurch gekennzeichnet, dass** das Assistenzsystem (20) ferner in einem Assistenzmodus automatisch planungs- und/oder führungsbezogene Anweisungen in Bezug auf konkrete Zustände der zu überwachenden Situation (10) generiert und dem Operateur (14) zur Unterstützung der Planungs- und/oder Führungsaufgabe der zu überwachenden Situation (10) die generierten planungs- und/oder führungsbezogene Anweisungen vorschlägt.

3. Assistenzsystem (20) nach Anspruch 2, **dadurch gekennzeichnet, dass** das Assistenzsystem (20) im Assistenzmodus eingerichtet ist, die in Bezug auf einen konkreten Zustand der zu überwachenden Situation (10) automatisch generierten und vorgeschlagenen planungs- und/oder führungsbezogene Anweisungen mit einer durch den Operateur (14) erstellten planungs- und/oder führungsbezogenen Anweisung zu vergleichen und in Abhängigkeit von dem Vergleich für zumindest eine automatisch generierte und vorgeschlagene planungs- und/oder führungsbezogene Anweisung eine Bewertung zu ermitteln, die dann im Lernmodus der Bewertungskomponente (24) zum Trainieren des maschinellen Lernsystems verwendet wird.

4. Assistenzsystem (20) nach Anspruch 2 oder 3, **dadurch gekennzeichnet, dass** das Assistenzsystem (20) im Assistenzmodus eingerichtet ist, die in Bezug auf einen konkreten Zustand der zu überwachenden Situation (10) automatisch generierten und vorgeschlagenen planungs- und/oder führungsbezogene Anweisungen durch den Operateur (14) bewerten zu lassen, um eine Bewertung zu ermitteln, die dann im Lernmodus der Bewertungskomponente (24) zum Trainieren des maschinellen Lernsystems verwendet wird.

5. Assistenzsystem (20) nach einem der Ansprüche 2 bis 4, **dadurch gekennzeichnet, dass** das Assistenzsystem (20) eingerichtet ist, beim Deaktivieren des Führungsmodus den Assistenzmodus zu aktivieren.

6. Assistenzsystem (20) nach einem der Ansprüche 2 bis 5, **dadurch gekennzeichnet, dass** das Assistenzsystem (20) eingerichtet ist, beim Aktivieren des Assistenzmodus den Lernmodus der Bewertungskomponente (24) zu aktivieren.

7. Assistenzsystem (20) nach einem der Ansprüche 2 bis 6, **dadurch gekennzeichnet, dass** das Assistenzsystem (20) eingerichtet ist, vor dem Deaktivieren des Führungsmodus und Aktivieren des Assistenzmodus eine Übergabestrategie zur Übergabe der Planungs- und/oder Führungsaufgaben der zu überwachenden Situation (10) vom Assistenzsystem (20) zum Operateur (14) ermittelt und angewendet wird.

8. Assistenzsystem (20) nach einem der vorhergehenden Ansprüche, **dadurch gekennzeichnet, dass** das Assistenzsystem (20) mit einem Sensorsystem verbunden ist, um den aktuellen Zustand der zu überwachenden Situation (10) zu erfassen.

9. Assistenzsystem (20) nach einem der vorhergehenden Ansprüche, **dadurch gekennzeichnet, dass** das maschinelle Lernsystem ein neuronales Netz aufweist.

10. Assistenzsystem (20) nach einem der vorhergehenden Ansprüche, **dadurch gekennzeichnet, dass** das Assistenzsystem (20) zur Unterstützung eines Lotsen bei Planungs- und/oder Führungsaufgaben einer zu überwachenden Verkehrssituation, insbesondere einer Luftverkehrssituation, Schiffsverkehrssituation oder einer Straßenverkehrssituation eingerichtet ist.

## Claims

1. Assistance system (20) for supporting an operator (14) in planning and/or guiding tasks relating to a situation (10) to be monitored, wherein the assistance system (20) automatically generates planning and/or guiding-related instructions in a guiding mode with regard to specific states of the situation (10) to be monitored and is set up to perform the planning and/or guiding task of the situation (10) to be monitored essentially autonomously based on the generated planning and/or guiding-related instructions, **characterized in that** the assistance system (20) has an evaluation component (24) that has a selectively activatable learning mode and evaluation mode and is set up to
- in the learning mode, to train an evaluation of planning and/or guiding-related instructions in relation to a specific state of the situation (10) to be monitored in a machine learning system, and
- in the evaluation mode, to determine an evaluation of a specific planning and/or guiding-related instruction in relation to a specific state of the situation (10) to be monitored from the trained machine learning system;
wherein the assistance system (20) is further configured to
- when the guiding mode is activated, to activate the evaluation mode of the evaluation component (24),
- then use the evaluation component (24) to determine an evaluation of a planning and/or guiding-related instruction automatically generated by the machine learning system based on a specific state of the situation (10) to be monitored, and
- leave the guiding mode in the activated state or deactivate it depending on the determined evaluation.

2. Assistance system (20) according to claim 1, **characterized in that** the assistance system (20) also automatically generates planning and/or guiding-related instructions in an assistance mode with regard to specific states of the situation (10) to be monitored and suggests the generated planning and/or guiding-related instructions to the operator (14) to support the planning and/or guiding task of the situation (10) to be monitored.

3. Assistance system (20) according to claim 2, **characterized in that** the assistance system (20) is set up in assistance mode to compare the planning and/or guiding-related instructions automatically generated and suggested with regard to a specific state of the situation (10) to be monitored with a planning and/or guiding-related instruction created by the operator (14) and, depending on the comparison, to determine an evaluation for at least one automatically generated and suggested planning and/or guiding-related instruction, which is then used in the learning mode of the evaluation component (24) to train the machine learning system.

4. Assistance system (20) according to claim 2 or 3, **characterized in that** the assistance system (20) is set up in assistance mode to have the operator (14) evaluate the planning and/or guiding-related instructions automatically generated and proposed in relation to a specific state of the situation to be monitored (10), in order to determine an evaluation which is then used in the learning mode of the evaluation component (24) to train the machine learning system.

5. Assistance system (20) according to one of claims 2 to 4, **characterized in that** the assistance system (20) is set up to activate the assistance mode when the guiding mode is deactivated.

6. Assistance system (20) according to one of claims 2 to 5, **characterized in that** the assistance system (20) is configured to activate the learning mode of the evaluation component (24) when the assistance mode is activated.

7. Assistance system (20) according to any of claims 2 to 6, **characterized in that** the assistance system (20) is set up to determine and apply a transfer strategy for transferring the planning and/or guiding tasks of the situation (10) to be monitored from the assistance system (20) to the operator (14) before deactivating the guiding mode and activating the assistance mode.

8. Assistance system (20) according to one of the preceding claims, **characterized in that** the assistance system (20) is connected to a sensor system in order to detect the current state of the situation (10) to be monitored.

9. Assistance system (20) according to one of the preceding claims, **characterized in that** the machine learning system has a neural network.

10. Assistance system (20) according to one of the preceding claims, **characterized in that** the assistance system (20) is designed to support a pilot in planning and/or guiding tasks for a traffic situation to be monitored, in particular an air traffic situation, a shipping traffic situation, or a road traffic situation.

## Revendications

1. Système d'assistance (20) destiné à aider un opérateur (14) dans des tâches de planification et/ou de guidage dans une situation à surveiller (10), le système d'assistance (20) générant automatiquement, en mode de guidage, des instructions liées à la planification et/ou au guidage par rapport à des états concrets de la situation à surveiller (10) et étant conçu pour exécuter de manière sensiblement autonome la tâche de planification et/ou de guidage dans la situation à surveiller (10) sur la base des instructions générées liées à la planification et/ou au guidage,
**caractérisé en ce que** le système d'assistance (20) comporte un composant d'évaluation (24) qui comprend un mode d'apprentissage et un mode d'évaluation pouvant être activés au choix et qui est conçu pour
- en mode d'apprentissage, entraîner une évaluation d'instructions liées à la planification et/ou au guidage par rapport à un état concret de la situation à surveiller (10), dans un système d'apprentissage automatique, et
- en mode d'évaluation, déterminer une évaluation d'une instruction concrète liée à la planification et/ou au guidage par rapport à un état concret de la situation à surveiller (10), à partir du système d'apprentissage automatique entraîné,
le système d'assistance (20) étant en outre conçu pour
- lors de l'activation du mode de guidage, activer le mode d'évaluation du composant d'évaluation (24),
- à l'aide du composant d'évaluation (24), déterminer ensuite une évaluation d'une instruction liée à la planification et/ou au guidage, générée automatiquement sur la base d'un état concret de la situation à surveiller (10), à partir du système d'apprentissage automatique entraîné, et
- en fonction de l'évaluation déterminée, laisser le mode de guidage à l'état activé ou le désactiver.

2. Système d'assistance (20) selon la revendication 1,
**caractérisé en ce que** le système d'assistance (20) génère en outre automatiquement, en mode d'assistance, des instructions liées à la planification et/ou au guidage par rapport à des états concrets de la situation à surveiller (10) et propose à l'opérateur (14), afin de l'aider dans la tâche de planification et/ou de guidage dans la situation à surveiller (10), les instructions générées liées à la planification et/ou au guidage.

3. Système d'assistance (20) selon la revendication 2,
**caractérisé en ce que** le système d'assistance (20) est conçu, en mode d'assistance, pour comparer les instructions liées à la planification et/ou au guidage, générées et proposées automatiquement par rapport à un état concret de la situation à surveiller (10), avec une instruction liée à la planification et/ou au guidage établie par l'opérateur (14), et pour déterminer, en fonction de la comparaison, une évaluation pour au moins une instruction liée à la planification et/ou au guidage générée et proposée automatiquement, qui est ensuite utilisée en mode d'apprentissage du composant d'évaluation (24) pour entraîner le système d'apprentissage automatique.

4. Système d'assistance (20) selon la revendication 2 ou 3,
**caractérisé en ce que** le système d'assistance (20) est conçu, en mode d'assistance, pour faire évaluer par l'opérateur (14) les instructions liées à la planification et/ou au guidage générées et proposées automatiquement par rapport à un état concret de la situation à surveiller (10), afin de déterminer une évaluation qui est ensuite utilisée, en mode d'apprentissage du composant d'évaluation (24), pour entraîner le système d'apprentissage automatique.

5. Système d'assistance (20) selon l'une des revendications 2 à 4,
**caractérisé en ce que** le système d'assistance (20) est conçu pour activer le mode d'assistance lors de la désactivation du mode de guidage.

6. Système d'assistance (20) selon l'une des revendications 2 à 5,
**caractérisé en ce que** le système d'assistance (20) est conçu pour activer le mode d'apprentissage du composant d'évaluation (24) lors de l'activation du mode d'assistance.

7. Système d'assistance (20) selon l'une des revendications 2 à 6,
**caractérisé en ce que** le système d'assistance (20) est conçu pour déterminer et appliquer, avant la désactivation du mode de guidage et l'activation du mode d'assistance, une stratégie de transfert pour transférer du système d'assistance (20) à l'opérateur (14) les tâches de planification et/ou de guidage dans la situation à surveiller (10).

8. Système d'assistance (20) selon l'une des revendications précédentes,
**caractérisé en ce que** le système d'assistance (20) est relié à un système de capteurs afin de détecter l'état actuel de la situation à surveiller (10).

9. Système d'assistance (20) selon l'une des revendications précédentes,
**caractérisé en ce que** le système d'apprentissage automatique comprend un réseau neuronal.

10. Système d'assistance (20) selon l'une des revendications précédentes,
**caractérisé en ce que** le système d'assistance (20) est conçu pour aider un contrôleur aérien ou un pilote portuaire dans ses tâches de planification et/ou de guidage dans une situation de trafic à surveiller, en particulier dans une situation de trafic aérien, dans une situation de trafic maritime ou dans une situation de trafic routier.
